# EUROPÄISCHE PATENTSCHRIFT

(11) **EP 1 620 519 B1**
(45) Veröffentlichungstag und Bekanntmachung des Hinweises auf die Patenterteilung: **21.01.2009**
(21) Anmeldenummer: 04738500.0
(22) Anmeldetag: 07.05.2004
(51) Int. Cl.: C09J 5/02, B05D 1/42, B05D 3/12, B05C 11/02

(54) **VERWENDUNG EINES VERFAHRENS ZUR VERKLEBUNGSVORBEREITUNG**
USE OF A METHOD FOR THE PREPARATION OF ADHESIVE
UTILISATION D'UN PROCEDE DE PREPARATION AU COLLAGE

(30) Priorität: 07.05.2003 DE 10320581
(43) Veröffentlichungstag der Anmeldung: 01.02.2006
(73) Patentinhaber: Klebchemie M.G. Becker GmbH & Co. KG, 76356 Weingarten/Baden (DE)
(72) Erfinder: STRUVE, Friedrich, 83024 Rosenheim (DE)
(74) Vertreter: Hörschler, Wolfram Johannes
(86) Internationale Anmeldenummer: PCT/DE2004/000973
(87) Internationale Veröffentlichungsnummer: WO 2004/099333

(56) Entgegenhaltungen:
- EP-A- 0 291 443
- WO-A-03/031490
- DE-A- 19 819 304
- DATABASE WPI Section Ch, Week 199402 Derwent Publications Ltd., London, GB; Class A35, AN 1994-015272 XP002296026 & SU 1 784 287 A1 (SCI PRODN ASSOC LAVOCHKIN) 30. Dezember 1992 (1992-12-30)

## Beschreibung

Die vorliegende Erfindung betrifft das oberbegrifflich Beanspruchte und befaßt sich somit mit der Verklebung von Gegenständen.

Die Verklebung von Gegenständen ist im industriellen Bereich ein Prozeß, der genau zu führen ist, um adäquate Verklebungsergebnisse zu erzielen. Für ein gutes Verklebungsergebnis ist insbesondere sicherzustellen, daß eine gleichmäßige und dauerhafte Verklebung erfolgt. Im Regelfall vieler Anwendungen, etwa bei der Verklebung von Kunststoffen miteinander, wie bei Fensterprofilen, auf welche Schutz- und/oder Zierfolien aufzukleben sind, muß zunächst der Untergrund vorbehandelt werden, um gute Verklebungsergebnisse zu erzielen. Dabei wird ein Material (Primer) aufgetragen, welches dafür sorgt, daß sich der später aufzutragende Klebstoff mit dem Kunststoffträger des Grundkörpers innig verbindet. Eine typische Auftragung dieses Primers erfolgt im Stand der Technik etwa dadurch, daß der Gegenstand auf einer Förderbahn an einer Auftragevorrichtung wie einem Wischfilz entlang bewegt und danach erforderlichenfalls die Auftragung vergleichmäßigt wird. Nach dem Einwirken des Primers kann dann beispielsweise eine Ummantelung unter Verwendung von PUR-Heißklebern oder anderen Materialien aufgebracht werden.

Häufig ist es nun erforderlich, eine bestimmte Form der Konditionierung vorzunehmen. Bei begrenzten Anlagegrößen und gegebener Transportgeschwindigkeit des für die Verklebung vorzubereitenden Gegenstandes ist die zur Verfügung stehende Einwirk- oder Reaktionszeit des Primers aber begrenzt. Nichts anderes gilt im übrigen, wenn nicht ein Primer aufgetragen wird, sondern ein Klebstoff, der antrocknen, anreagieren oder sich sonstwie zur Vorbereitung der Verklebung verändern soll.

Bei herkömmlichen Primern, die auf der Basis leichtflüchtiger, organischer Lösemittel aufgebaut sind, kann es ausreichend sein, nach der Auftragung zur weiteren Vorbereitung der Verklebung als Konditionierung lediglich eine Vergleichmäßigung des aufgetragenen Primerfluids vorzunehmen und durch Transport des mit Primer versehenen Profils oder Gegenstandes über eine bestimmte Strecke mit gegebener Geschwindigkeit eine hinreichende Einwirkzeit sicherzustellen. Anlagen und Verfahren, bei denen dies der Fall ist, sind bereits bekannt. Bekannte Systeme führen auch zu akzeptablen Klebeergebnissen.

Die Verwendung von Primern auf der Basis organischer, leichtflüchtiger Lösemittel ist jedoch in zunehmendem Maße aus verschiedenen Gründen unerwünscht. Bevorzugt wären Verklebungen, bei denen zumindest der Primer wasserbasiert ist oder wasserbasiert gewählt werden kann. Typisch ist jedoch bei wasserbasierten Primern in herkömmlichen Anlagen zwischen Auftragung und Verklebung die Einwirkzeit des verklebungsvorbereitenden Mittels zu klein und/oder es muß so viel Material aufgetragen werden, daß es auf Grund der geringeren Dampfdrücke in bestehenden Anlagen nicht ohne weiteres bis zum Zeitpunkt der Verklebung hinreichend weit getrocknet ist. Verwiesen wird unter anderem auf die DE 44 28 382 A1, die einen wässrigen Primer für unpolare Kunststoffe wie PE, PP, EPDM usw betrifft. Der Primer soll durch Techniken wie Sprühen, Gießen, Pinseln, Walzen oder Tauchen aufgetragen und dann mit warmer Luft der Infrarotstrahlung getrocknet werden, was üblicherweise 2-6 Minuten dauern soll. Nachteilig ist in jedem Fall die lange Trockendauer.

Die WO-A-03/031490 beschreibt das Ummanteln von Fensterprofilen u.a. aus PVC, wobei vor der Verklebung ein Primer aufgetragen wird. Prinzipiell besteht nun etwa die Möglichkeit, bestehende Anlagen baulich zu verlängern. Dies führt allerdings auf Grund der dann erforderlichen größeren Hallen zu womöglich beachtlichen Investitionen. Auch besteht eine Möglichkeit, durch erhebliches Erwärmen der Profile nach Auftragen des Mittels eine solche Konditionierung vorzunehmen, daß das Verkleben erleichtert wird. Nachteilig ist jedoch, daß dann oftmals Temperaturen erreicht werden, die die spätere Verklebung beeinträchtigen, also wiederum eine hinreichende Abkühlzeit und damit längere Transportwege für den zu verklebenden Gegenstand auf dem Förderband erforderlich machen und/oder daß, gerade bei dünneren Profilen, eine Deformierung auftreten kann, die bis zur Unbrauchbarkeit des vorhandenen Werkstückes gehen kann.

Wünschenswert ist es, zumindest einige der erwähnten Probleme zumindest partiell zu lindern.

Die Aufgabe dieser Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Ein erster wesentlicher Aspekt der vorliegenden Erfindung besteht somit in der Erkenntnis, daß eine Konditionierung unter Bürsten bei Gegenständen mit PVC-Oberfläche vorteilhaft ist. Anders als bei der herkömmlichen Vergleichmäßigung mittels Wischfilzen und dergleichen kann bei Bürsten eine gleichmäßige und besonders gute Konditionierung auch auf komplex geformten PVC-Profilen mit Kehlen und dergleichen erfolgen und es wird durch die Bürstbewegung relativ zum Gegenstand eine besonders gute Verteilung und dergleichen erzielt. Dies ist möglicherweise bei wasserbasierten Systemen der Fall, weil bei Bürsten durch die Borstenanordnung insbesondere hinsichtlich der typischen Länge und/oder deren Dichte bzw. Dicke eine andere, geeignetere Kapillarkrafteinwirkung auf das Mittel gegeben ist als bei Wischfilzen. Es sei dabei darauf hingewiesen, daß typische Bürstenbewegungen über den Gegenstand hinweg mit einer größeren Geschwindigkeit und/oder unter höherem Aufpressdruck erfolgen als etwa langsame manuelle Pinselbewegungen.

Abhängig von der Auslegung der Bürstenhärte und/oder des Bürstenaufpresdrucks kann überdies eine leichte Aufrauhung erfolgen, die gerade bei Primern zu dem gewünschten positiven Effekt weiter beiträgt.

Die Gegenstandsverklebung erfolgt, indem zwei Gegenstände flächig, also nicht bloß punktuell miteinander verklebt werden. Bei flächiger Verklebung ist es besonders wichtig, daß eine über die Fläche hinreichend gleichmäßige und konstante Verklebung erreicht wird, was sich insbesondere in guten Verklebungsergebnissen niederschlägt. So kann insbesondere eine hohe Schälprüfungsfestigkeit erreicht werden.

Die flächige Verklebung erfolgt als Ummantelung eines Trägers mit einer vergleichsweise dünnen Folie. Der dickere Träger wird vorbereitet und dann eine entsprechende Folie aufgebracht. Bei dem Träger handelt es sich um PVC-Profile, wie sie für Fenster üblich sind.

Die Verklebung und die Vorbereitung der Verklebung liefern auch gute Ergebnisse, obwohl der Gegenstand entsprechend profiliert ist und gegebenenfalls sogar bereits durch Koextrusion gebildete Gegenstände vorbereitet werden. So können Dichtlippen und dergleichen in einem später zu ummantelnden Fensterprofil vorgesehen werden und auch bei solchen komplex geformten Gegenständen liefert die erfindungsgemäße Verwendung gute Ergebnisse.

Die Verklebung erfolgt an Fensterprofilen, die typisch langgestreckt sind, wobei diese am Auftragungsort des Mittels vorbeigeführt werden können und an einer später mit der Bewegung des Fensterprofils erreichten Stelle eine Konditionierung vorgenommen wird.

Bei dem Mittel kann es sich insbesondere um einen Primer handeln, der insbesondere wasserbasiert ist. Mit der Konditionierung kann sichergestellt werden, daß durch einen Überschuß verbleibenden Materials das Klebeergebnis nicht beeinträchtigt wird und/oder schlechte Ergebnisse deshalb erreicht werden, weil von vornherein zu wenig Material aufgetragen wird.

Es ist möglich und bevorzugt, zunächst das Mittel im Überschuß aufzutragen, insbesondere als Fluid oder Flüssigkeit, und dann eine Konditionierung durch Verteilung und/oder einen Abtrag des Mittels oder partiell umgesetzten Mittels zu erreichen.

Die Konditionierung wird typisch wenigstens zwei separate Konditionierschritte umfassen, nämlich typisch einerseits den Schritt einer Vergleichmäßigung des im Überschuß aufgetragenen Materials und andererseits den eines Abtrags. Die zur Vergleichmäßigung vorgenommene Konditionierung kann dabei typisch im Nassen erfolgen, so daß sichergestellt ist, daß die für eine Vergleichmäßigung hinreichende Menge an vorbehandelndem Mittel zur Verfügung steht, während der Abtrag des Überschusses im lediglich Feuchten erfolgt, also ein Teil des Materials schon entfernt, verdunstet oder umgesetzt ist. Ein solches Vorgehen mit zwei unterschiedlichen Konditionierschritten im Nassen und Feuchten erfordert einerseits eine hinreichende und dennoch nicht zu lange Bewegungsstrecke zwischen den beiden Stationen, an denen die jeweilige Konditionierung vorgenommen wird, und gewährleistet somit ein hinreichend langes Einwirken des aufgetragenen Mittels, und stellt andererseits sicher, daß nicht ein erheblicher Überschuß an Material verwendet werden muß.

Die Bürsten werden typisch nicht einfach streifend in die Bewegungsbahn gehalten, sondern zugleich oszillierend und/oder drehend bewegt. Dies stellt zunächst sicher, daß sich durch die Veränderung der Bürstenhaarlage immer wieder neue Kapilarstrukturen ausbilden, was zu einer gleichmäßigeren Verteilung der Flüssigkeit an der Bürste und somit am Gegenstand führt. Besonders bevorzugt ist es, wenn die Bürsten drehend über die Oberfläche des Gegenstandes geführt werden, weil dann eine noch bessere Vergleichmäßigung erzielt wird. Insbesondere ist es möglich, eine rotierende Bürste so anzuordnen, daß die Achse allgemein parallel zur Ebene liegt, längs welcher der Gegenstand bewegt wird. Dabei wird aber die Bürstenachse typisch ungefähr quer zur Bewegungsrichtung liegen, so daß ein Abstreifen des Gegenstandes mit etwa tangentialen Bürstenhaaren erfolgt. Daß die Bewegung über den Gegenstand nicht exakt tangential ist, insbesondere dann, wenn längere Bürstenhaare am Gegenstand umgebogen werden, sei erwähnt.

Die Bürste kann entgegen der Gegenstandsbewegungsrichtung umlaufen, was bei gleicher Bürstengeschwindigkeit die Relativbewegung erhöht und überdies ein Rücktreiben überschüssigen Materials vor den Bürstenkontaktpunkt bewirkt und somit die Konditionierung erleichtert. Wenn eine zweistufige Bürstenkonditionierung mit bewegten Bürsten erfolgt, insbesondere zur Vergleichmäßigung und zum Überschußabtrag, kann die erste Bürste langsamer als die zweite Bürste bewegt werden. Auf diese Weise wird erreicht, daß mit der schnellen Bewegung der zweiten Bürste der Abtrag erfolgt.

Nach dem Abtrag des Überschusses wird bevorzugt noch ein Abblase- oder Erwärmschritt vorgenommen, bei dem eine weitere Einwirkung des sich aufkonzentrierenden Primers möglich ist und/oder z.B. die bloße Entfernung Trocknung nach einer gegebenen Einwirkzeit.

Es sei erwähnt, daß der Primer als wasserbasierter Primer unter anderem durch Konzentrationswahl, Mittel zur Beeinflussung des Benetzungsverhaltens an das Verfahren angepaßt werden kann, um eine hinreichend kurze Abdampfzeit zu gewährleisten und dennoch die Materialvorbereitung zu ermöglichen.

Die erfindungsgemäße Verwendung des Verfahrens ist nicht nur bei kompliziert geformten Fensterprofilen mit Vertiefungen und/oder Rillen vorteilhaft, sondern ist gerade bei langgestreckten Fensterprofilen im Anfang- und Endbereich auf Grund dort vorhandener Profilführungs- und Materialtoleranzen vorteilhaft, da diese leicht zu einer ungleichmäßigen Behandlung mit vorbereitendem Mittel führen. überdies wird verhindert, daß sich überschüssiger Primer an Hohlkehlen und Dichtungsprofilen sammelt oder dann, wenn mehrere Filze für komplizierte Fensterprofile mit überlappendem Streichbereich verwendet werden. Die gesamte Prozeßsicherheit steigt, es kann mit geringerer Temperatur und somit einer wesentlich geringeren Energiezufuhr in der Fertigung gearbeitet werden. Zugleich steigt auf Grund der geringeren Temperatur die Anfangsfestigkeit typischer Klebstoffe und die Verzugsneigung der Fensterprofile ist geringer. Hinzu kommt, daß die Rüstzeit bei Wechsel des Fensterprofils stark verringert ist, da sich durch die Flexibilität der Bürstenhaare ein Wechsel im Regelfall erübrigt und keine Filze oder dergleichen zuzuschneiden sind.

Die Erfindung wird im Folgenden und beispielsweise anhand der Zeichnung beschrieben. In dieser zeigt:

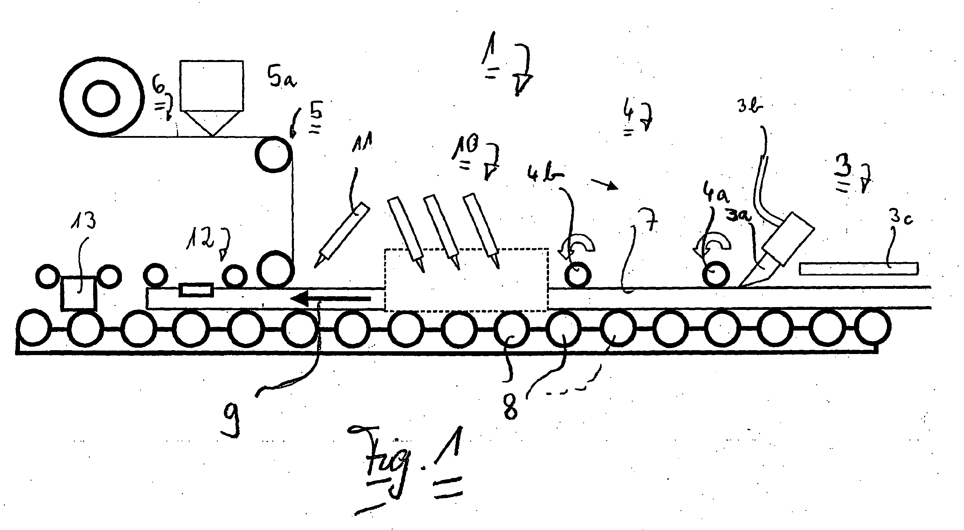

- Fig. 1: eine Vorrichtung zur Verklebung eines Gegenstandes.

Nach Fig. 1 umfaßt eine allgemein mit 1 bezeichnete Vorrichtung 1 zur Gegenstandsverklebung, mit welcher ein Mittel 2 zur Vorbereitung der Verklebung aufgetragen und vor dem Verkleben eine Konditionierung unter Bürsten vorgenommen wird, eine Station 3 zur Auftragung des Mittels 2, eine Station bzw. Konditionierstufe 4 mit Bürsten 4a, 4b zur Konditionierung vor dem Verkleben und eine Verklebestufe 5, an der die eigentliche Verklebung vorgenommen wird.

Die Vorrichtung 1 ist im Vorliegenden als Verarbeitungsstation ausgebildet, mit welcher Profile 7 aus PVC-Material mit einer Ummantelung 6 verklebt werden, wobei die Profile 7 auf einer Förderrollenbahn aus Förderrollen 8 unter den verschiedenen Bearbeitungsstationen hindurch bewegt werden, wie durch den Pfeil 9 angedeutet.

An der Auftragungsstation 3 ist ein Wischfilz 3a vorgesehen, der über eine Leitung 3b auf seiner vom PVC-Profil abgewandten Seite mit einem Vorrat von Primer 2 als Mittel zur Vorbereitung der Verklebung beaufschlagt wird, und zwar in einer Menge, die ausreicht, um auf seiner dem PVC-Profil 7 zugewandten Seite zu einer Benässung an den später zu verklebenden Stellen zu führen. Wie bevorzugt möglich, ist in der dargestellten Ausführung dem Wischfilz 3a in der Auftragstufe, wie bei 3c angedeutet, eine Vorerwärmungsstufe 3c zugeordnet.

Nach der Auftragungsstation 3 ist in Bewegungsrichtung des Profils die Konditionierstufe 4 vorgesehen. Diese umfaßt zwei Bürsten 4a, 4b.

Die Bürste 4a ist dicht hinter dem Auftragfilz angeordnet. Ihr ist ein Antrieb (nicht gezeigt) zugeordnet, der für die Drehung mit einer vergleichsweise geringen Geschwindigkeit ausgelegt ist, und zwar so, daß die Dreh-Bewegung der am Gegenstand der PVC-Profil-Transportrichtung über die Förderrollen 8 entgegengesetzt ist. Im dargestellten Ausführungsbeispiel erfolgt also eine Drehung im Gegenuhrzeigersinn über den darunter nach links bewegten Gegenstand. Die Bürstengeschwindigkeit ist so gewählt, daß Material nicht, zumindest nicht weit weg von der Oberfläche geschleudert wird, sondern im Kontaktbereich zwischen Bürste und Gegenstand verbleibt. Die Bürstenhaarlänge und der Abstand des Bürstenmittelpunktes zum Gegenstand ist so bemaßt, daß eine hinreichende Kontaktfläche und eine ausreichende Kontaktierung an allen Stellen des Profils, auch in Hohlkehlen und dergl. gegeben ist. Im übrigen sind die Bürstenhaar so dicht, daß eine hinreichende Menge an aufgetragenem Mittel zwischen diesen bei der Rotation mitgenommen werden kann.

Die zweite Bürste 4b der Konditionierungsstufe 4 ist in Förderrichtzung des Profils um eine Strecke von der ersten Bürste 4a beabstandet, die ausreicht, um eine erforderlichesMAß an Vortrocknung und/oder Einwirkung zu gewährleisten. In der Praxis haben sich bei geeigneten Primern Strecken um 30 - 90 cm als ausreichend erwiesen. Der zweiten Bürste 4 b ist wie der ersten Bürste 4a ein Drehantrieb zugeordnet, wobei jedoch der Drehantrieb dazu ausgelegt und/oder angesteuert ist, der die Bürste 4b eine wesentlich schnellere Drehung zu verleihen, als dies bei der Bürste 4a der Fall ist. In einem praktischen Ausführungsbeispiel wurde eine etwa dreifach höhere Umdrehungsgeschwindigkeit gewählt.

Die Bürsten 4a, 4b kontaktieren das PVC-Profil über dem gesamten Bereich des Primerauftrags. Das Bürstenmaterial ist so gewählt, daß es gegen die Primernässe bei der ersten Bürste bzw. Primerfeuchte bei der zweiten Bürste langfristig beständig ist. Insbesondere sind Kunststoffbürsten geeignet.

Den Bürsten 4a, 4b nachgeschaltet ist ein Wärmekanal 10 mit zugeordnetem Gebläse, in dem eine Profilabtrocknung und eine Erwärmung auf ca. 35°C erfolgt.

Nach der Profilabtrocknungsstufe 10 ist die Verklebestufe 5 vorgesehen, bei der die PVC-Folie mit dem auf diese an einer Stufe 5a aufgebrachten heißen Kleber zugeführt wird, wobei durch zusätzliche Heißgebläse 11 oder dergleichen am Kontaktpunkt eine Temperatur von über 50°C erreicht wird. Der Klebestelle ist eine Nachbehandlungsstufe 12 zugeordnet, an der ein Anpressen usw. vorgenommen werden kann sowie eine Entnahmestufe 13, an welcher das fertig ummantelte, verklebte Profil entnommen werden kann. Die letzteren Stufen sind per se herkömmlich.

### Die Anordnung wird verwendet wie folgt:

Zunächst wird ein PVC-Profil an der an der Auftragestation 3 in der Aufwärmeeinheit 3c leicht vorerwärmt und durch Vorbeistreifen am Wischfilz mit dem wasserbasierten Primer 2 im Überschuß benässt.

Danach durchläuft es auf den Rollen 8 die kurze Strecke bis zur ersten, langsam drehenden Bürste 4a, wo eine Vergleichmäßigung des Auftrages erfolgt. Überschußmaterial wird dabei vor der Bürste 4a auf dem PVC-Profil 7 zurückgetrieben, so daß die Bürste 4a im Nassen arbeitet.

Im weiteren Verlauf der Bewegung erfolgt eine Vortrocknung im Bereich zwischen den Bürsten 4a und 4b und der Primer beginnt, einzuwirken.

Von dem Profil wird dann Material weggeschleudert, und zwar an der Bürste 4b. Wiederum erfolgt dies an der gesamten Profilbreite. Die dabei auf das Profil einwirkenden Kräfte sind so gering, daß keinerlei bleibende Deformation auftritt.

Danach wird das Profil im Wärmekanal 10 abgetrocknet, mit dem Heißluftgebläse 11 erwärmt und mit der mit Heißkleber versehenen Folie am Kontaktpunkt 5 in per se bekannter Weise beklebt.

Vergleichsversuche haben ergeben, daß sich so bei geringem Energieverbrauch eine sehr gute Verklebung erreichen läßt, und zwar auch in kritschen Profil-Anfangs- und -endbereichen. Als Maß für die Verklebung wurde die Schälprüfung nach RAL 716/1 mit entsprechenden Profilen vorgenommen. Dabei wurden verglichen:
- Variante 1:: nasser Wischfilz, nachfolgend Verteilung mit Trockenfilz
- Variante 2:: nasser Wischfilz, nachfolgend Verteilung mit langsam drehender Bürste in erster Konditionsierungsstufe und nachfolgender Trockenfilz-Konditionierung
- Variante 3:: nasser Wischfilz, nachfolgend Verteilung mit langsam drehender Bürste in erster Konditionsierungsstufe und nachfolgender Konditionsierungsstufe mit schnelldrehender Bürste.

Die Schälfestigkeiten betrugen:
- Variante 1:: 2,8 Fr
- Variante 2:: 3,0 Fr
- Variante 3:: 3,2 Fr

Dies zeigt, daß durch Bürsten eine sehr hohe Schälfestigkeit im Folienabriss erreichbar ist.

## Patentansprüche

1. Verwendung eines Verfahren zur Gegenstandsverklebung, worin ein Mittel zur Vorbereitung der Verklebung aufgetragen und vor dem Verkleben eine Konditionierung unter Bürsten vorgenommen wird, zur Verklebung eines Fensterprofils aus PVC-Material mit einer Ummantelung.

2. Verwendung nach Anspruch 1, **dadurch gekennzeichnet, daß** das Mittel zur Konditionierung ein Primer ist.

3. Verwendung nach einem der vorhergehenden Ansprüche, **dadurch gekennzeichnet, daß** das Mittel wasserbasiert ist.

4. Verwendung nach einem der vorhergehenden Ansprüche, **dadurch gekennzeichnet, daß** das Mittel im Überschuß aufgetragen wird.

5. Verwendung nach einem der vorhergehenden Ansprüche, **dadurch gekennzeichnet, daß** das Mittel als Fluid, insbesondere als Flüssigkeit aufgetragen wird.

6. Verwendung nach einem der vorhergehenden Ansprüche, **dadurch gekennzeichnet, daß** die Konditionierung die Verteilung des aufgetragenen Mittels und/oder einen Abtrag bewirkt.

7. Verwendung nach einem der vorhergehenden Ansprüche, **dadurch gekennnzeichnet, daß** die Konditionierung zumindest zwei separate Konditionierschritte umfasst.

8. Verwendung nach einem der vorhergehenden Ansprüche, **dadurch gekennzeichnet, daß** der erste Konditionierschritt im Nassen erfolgt.

9. Verwendung nach einem der vorhergehenden Ansprüche, **dadurch gekennzeichnet, daß** ein weiterer Konditionierschritt im Feuchten erfolgt.

10. Verwendung nach einem der vorhergehenden Ansprüche, **dadurch gekennzeichnet, daß** ein erster Konditionierschritt zur Vergleichmäßigung und ein zweiter Kondtionierschritt zum Überschußabtrag vorgenommen wird.

11. Verwendung nach einem der vorhergehenden Ansprüche, **dadurch gekennzeichnet, daß** die Bürsten bewegt werden, insbesondere oszillierend und/oder drehend über die Oberfläche des Gegenstandes.

12. Verwendung nach einem der vorhergehenden Ansprüche, worin zumindest eine Bürste gedreht wird und die Bürstenachse der rotierenden Bürste allgemein parallel zur Bewegungsebene, insbesondere allgemein senkrecht zur Bewegungsrichtung angeordnet ist.

13. Verwendung nach dem vorhergehenden Anspruch, **dadurch gekennzeichnet, daß** die Bürste entgegen der Gegenstandsbewegungsrichtung umläuft.

14. Verwendung nach einem der vorhergehenden Ansprüche, **dadurch gekennzeichnet, daß** zumindest zwei Schritte einer Bürstenkonditionierung mit bewegten Bürsten erfolgen und die erste Bürste langsamer als die zweite Bürste bewegt wird.

15. Verwendung nach einem der vorhergehenden Ansprüche, worin die Konditionierung weiter einen Abblase- und/oder Erwärmschritt, insbesondere nach dem Bürsten umfasst.

## Claims

1. Use of a method of adhesively bonding articles, in which an agent for preparing for bonding is applied and adhesive bonding is preceded by conditioning with brushing, in order to bond a window profile made of PVC material with a wrapper.

2. Use according to Claim 1, **characterized in that** the agent for conditioning is a primer.

3. Use according to one of the preceding claims, **characterized in that** the agent is water-based.

4. Use according to one of the preceding claims, **characterized in that** the agent is applied in excess.

5. Use according to one of the preceding claims, **characterized in that** the agent is applied as a fluid, in particular as a liquid.

6. Use according to one of the preceding claims, **characterized in that** conditioning has the effect of spreading the applied agent and/or of removal.

7. Use according to one of the preceding claims, **characterized in that** the conditioning encompasses at least two separate conditioning steps.

8. Use according to one of the preceding claims, **characterized in that** the first conditioning step takes place in a wet system.

9. Use according to one of the preceding claims, **characterized in that** a further conditioning step takes place in a moist system.

10. Use according to one of the preceding claims, **characterized in that** a first conditioning step is performed for evening-out and a second conditioning step is performed for removal of excess.

11. Use according to one of the preceding claims, **characterized in that** the brushes are moved, in particular oscillatingly and/or rotatingly over the surface of the article.

12. Use according to one of the preceding claims, in which at least one brush is rotated and the axis of the rotating brush is arranged generally parallel to the plane of movement, in particular generally perpendicular to the direction of movement.

13. Use according to the preceding claim, **characterized in that** the brush circulates counter to the article's direction of movement.

14. Use according to one of the preceding claims, **characterized in that** at least two steps of a brush conditioning take place with moving brushes and the first brush moves more slowly than the second brush.

15. Use according to one of the preceding claims, in which the conditioning further encompasses a blowing-off and/or heating step, in particular after brushing.

## Revendications

1. Utilisation d'un procédé de collage d'objets, dans lequel on applique un agent de préparation du collage et, avant le collage, on effectue un conditionnement par brossage, pour coller un profilé de fenêtre en matériau de PVC sur une enveloppe.

2. Utilisation selon la revendication 1, **caractérisée en ce que** l'agent de conditionnement est un primer.

3. Utilisation selon l'une des revendications précédentes, **caractérisée en ce que** l'agent est à base d'eau.

4. Utilisation selon l'une des revendications précédentes, **caractérisée en ce que** l'agent est appliqué en excès.

5. Utilisation selon l'une des revendications précédentes, **caractérisée en ce que** l'agent est appliqué sous forme fluide et en particulier liquide.

6. Utilisation selon l'une des revendications précédentes, **caractérisée en ce que** le conditionnement a pour effet la répartition et/ou l'enlèvement de l'agent appliqué.

7. Utilisation selon l'une des revendications précédentes, **caractérisée en ce que** le conditionnement comprend au moins deux étapes séparées de conditionnement.

8. Utilisation selon l'une des revendications précédentes, **caractérisée en ce que** la première étape de conditionnement s'effectue en conditions mouillées.

9. Utilisation selon l'une des revendications précédentes, **caractérisée en ce qu'**une autre étape de conditionnement s'effectue en conditions humides.

10. Utilisation selon l'une des revendications précédentes, **caractérisée en ce qu'**une première étape de conditionnement est réalisée pour uniformiser et une deuxième étape de conditionnement pour enlever l'excédent.

11. Utilisation selon l'une des revendications précédentes, **caractérisée en ce que** les brosses sont déplacées sur la surface de l'objet, en particulier par oscillation et/ou rotation.

12. Utilisation selon l'une des revendications précédentes, dans laquelle au moins une brosse est mise en rotation et l'axe de la brosse rotative est disposé globalement en parallèle au plan de déplacement et en particulier globalement à la perpendiculaire de la direction du déplacement.

13. Utilisation selon l'une des revendications précédentes, **caractérisée en ce que** la brosse tourne en opposition au sens de déplacement de l'objet.

14. Utilisation selon l'une des revendications précédentes, **caractérisée en ce qu'**au moins deux étapes d'un conditionnement à la brosse s'effectuent en déplaçant les brosses, la première brosse se déplaçant plus lentement que la deuxième brosse.

15. Utilisation selon l'une des revendications précédentes, dans laquelle le conditionnement comprend en outre une étape de soufflage et/ou de chauffage, en particulier après le brossage.
